# EUROPEAN PATENT APPLICATION

(11) **EP 4 129 648 A1**
(43) Date of publication of application: **08.02.2023**
(21) Application number: 21780441.8
(22) Date of filing: 10.03.2021
(51) Int. Cl.: B32B 17/06, C03C 17/09, C03C 27/10, B32B 3/00

(54) **MULTILAYER STRUCTURE**

(30) Priority: 30.03.2020 JP 2020059418
(71) Applicant: Nitto Denko Corporation, Ibaraki-shi, Osaka 567-8680 (JP)
(72) Inventor: MURASHIGE, Takeshi, Ibaraki-shi, Osaka 567-8680 (JP); INAGAKI, Junichi, Ibaraki-shi, Osaka 567-8680 (JP); SATO, Keisuke, Ibaraki-shi, Osaka 567-8680 (JP); KISHI, Atsushi, Ibaraki-shi, Osaka 567-8680 (JP)
(74) Representative: Hoffmann Eitle
(86) International application number: PCT/JP2021/009468
(87) International publication number: WO 2021/199986

(57) **Abstract**

A multilayered structure includes a plurality of laminated portions arranged on a base material, wherein the laminated portions each include a resin layer, a glass layer laminated over the resin layer via an adhesive layer, and a metal layer formed on a surface of the glass layer, the surface being oriented toward the adhesive layer, wherein a thickness of the glass layer is 10 um or more and 300 um or less, and a thickness of the resin layer is 10 um or more and 1000 um or less.

## Description

### TECHNICAL FIELD

The present invention relates to a multilayer structure.

### BACKGROUND ART

Multilayer structures in which two or more layers are laminated are known. As an example, a multilayer structure in which a silver reflecting layer is laminated on a thin glass layer (glass film) is given. Such a multilayer structure has surface hardness, dimensional stability, chemical resistance, lightness, and flexibility. Therefore, thin glass mirrors utilizing such a multilayer structure are capable of projecting a clear image because those thin glass mirrors are not only lightweight and free from problems such as scattering, but are also free from problems with conventional sheet glass mirrors, such as double reflection of images, due to a distance between the glass surface and the metal layer being extremely close.

### RELATED ART DOCUMENTS

### [Patent Document]

[Patent Document 1] Japanese Unexamined Patent Application Publication No. 2013-231744

### SUMMARY OF THE INVENTION

### [PROBLEM TO BE SOLVED BY THE INVENTION]

However, such thin glass mirrors are difficult to handle, and have handling issues when installing large area mirrors on buildings and the like.

It is an object of the present invention to provide a large area multilayer structure that can be used as a thin glass mirror.

### [MEANS FOR SOLVING THE PROBLEM]

In one aspect according to the present invention, a multilayered structure includes
a plurality of laminated portions arranged on a base material, wherein the laminated portions each include
a resin layer,
a glass layer laminated over the resin layer via an adhesive layer, and
a metal layer formed on a surface of the glass layer, the surface being oriented toward the adhesive layer, wherein a thickness of the glass layer is 10 µm or more and 300 µm or less, and a thickness of the resin layer is 10 um or more and 1000 µm or less.

### [ADVANTAGEOUS EFFECT OF THE PRESENT INVENTION]

According to the disclosed technology, a large area multilayer structure that can be used as a thin glass mirror may be provided.

### [BRIEF DESCRIPTION OF THE DRAWINGS]

FIG. 1 is a plan view illustrating a multilayer structure according to a first embodiment.
FIG. 2 is a partially enlarged cross-sectional view illustrating the multilayer structure according to the first embodiment.
FIG. 3 illustrates a preferable relationship between the size of the base material, the number of laminated portions, and the size of a gap.
FIG. 4 is a cross-sectional view illustrating a multilayer structure according to a first modification of the first embodiment.
FIG. 5 is a cross-sectional view illustrating a multilayer structure according to a second modification of the first embodiment.
FIG. 6 is a plan view illustrating a multilayer structure according to a third modification of the first embodiment.

### EMBODIMENTS FOR CARRYING OUT THE INVENTION

Hereinafter, an embodiment of the invention will be described with reference to the accompanying drawings. In each of the drawings, the same components are denoted by the same reference numerals, and duplicate descriptions may be omitted.

### <First Embodiment>

### [Multilayer Structure]

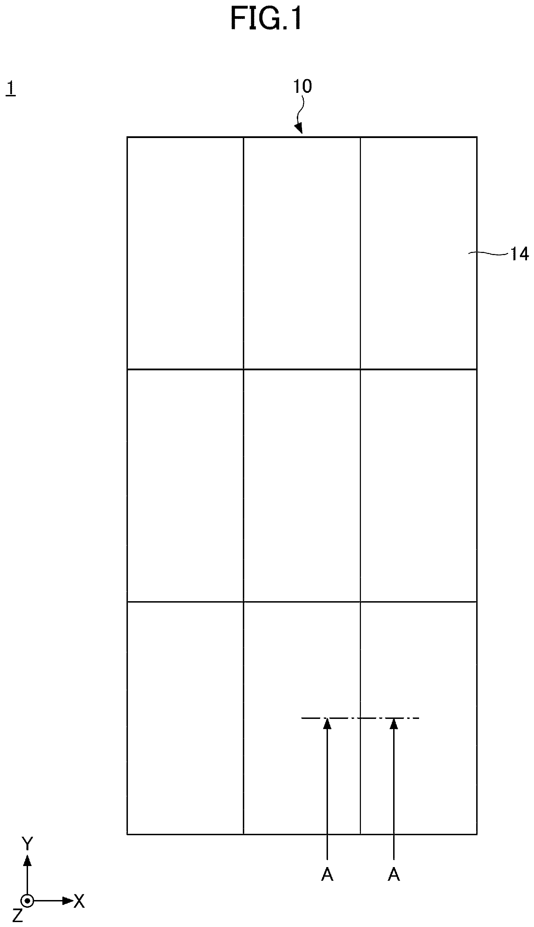

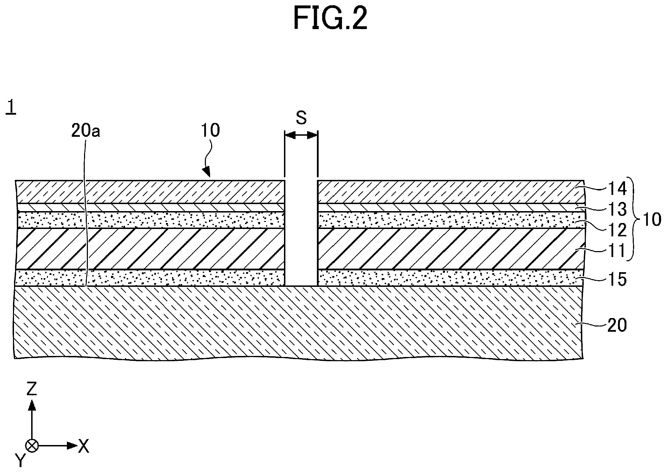

FIG. 1 is a plan view illustrating a multilayer structure according to a first embodiment. FIG. 2 is a partially enlarged cross-sectional view illustrating the multilayer structure according to the first embodiment, which illustrates a sectional view taken along a line A-A in FIG. 1.

As illustrated in FIGS. 1 and 2, a multilayer structure 1 includes a plurality of laminated portions 10 arranged on a single base material 20.

In the present embodiment, as an example, a planar shape of a multilayer structure 1 (a shape viewed from the direction normal to an upper surface 20a of the base material 20) is a rectangular shape, a short side direction of the rectangular shape is an X direction, a long side direction of the rectangular shape is a Y direction, and a thickness direction of the multilayer structure 1 is a Z direction. The X, Y, and Z directions are orthogonal to each other. When the planar shape of the multilayer structure 1 is rectangular, for example, the width (X direction) may be approximately 1 m to 10 m, and the height (Y direction) may be approximately 1.5 m to 3.5 m.

In the present embodiment, as an example, in the multilayer structure 1, nine laminated portions 10 are arranged on the upper surface 20a of the base material 20. However, in the multilayer structure 1, the number of the laminated portions 10 arranged on the upper surface 20a of the base material 20 may be two or more as desired.

In the multilayer structure 1, each laminated portion 10 is fixed to the upper surface 20a of the base material 20 via an adhesive layer 15. The laminated portions 10 each include a resin layer 11, an adhesive layer 12, a metal layer 13, and a glass layer 14. The glass layer 14 is laminated over the resin layer 11 via the adhesive layer 12. The metal layer 13 is formed on a surface of the glass layer 14 that is oriented toward the adhesive layer 12.

Although the laminated portion 10 has flexibility, the multilayer structure 1 as a whole need not necessarily have flexibility. The flexibility required for the multilayer structure 1 as a whole may be provided by adjusting the material and the thickness of the base material 20, for example.

The planar shapes of the resin layer 11, the adhesive layer 12, the metal layer 13, and the glass layer 14 are rectangular, that is, the planar shape of the laminated portion 10 is rectangular as an example in this embodiment.

The multilayer structure 1 can be used, for example, as a mirror, but it is preferable to make joints of the adjacent laminated portions 10 less visible. That is, it is preferable that the laminated portions 10 are arranged on the base material 20 without gaps. However, in practice, it is difficult to make the gap width between the adjacent laminated portions 10 zero, and as illustrated in FIG. 2, a gap S is formed at the joint of the laminated portions 10 adjacent to each other in the X direction. A similar gap is also formed at the joint of the laminated portions 10 adjacent to each other in the Y direction.

The gap S is preferably 10 µm or more and 500 µm or less. By making the gap S 500 µm or less, it is possible to make it difficult to visually identify the joint of the adjacent laminated portions 10. The lower limit is set to 10 µm because a gap of approximately 10 um is always formed practically even if the plurality of laminated portions 10 are fixed on the base material 20 with a target of the gap S being set to 0 um. However, if the dimensional accuracy of the individually divided laminated portions 10 can be improved, there is a possibility that the gap S can be made smaller than 10 µm.

From the viewpoint of making the joint of the adjacent laminated portions 10 more difficult to be visually identified, the gap S is more preferably from 10 um or more and 200 µm or less, more preferably from 10 um or more and 100 µm or less, and particularly preferably from 10 um or more and 50 µm or less. When the gap S is 50 µm or less, the joint of the adjacent laminated portions 10 is almost invisible.

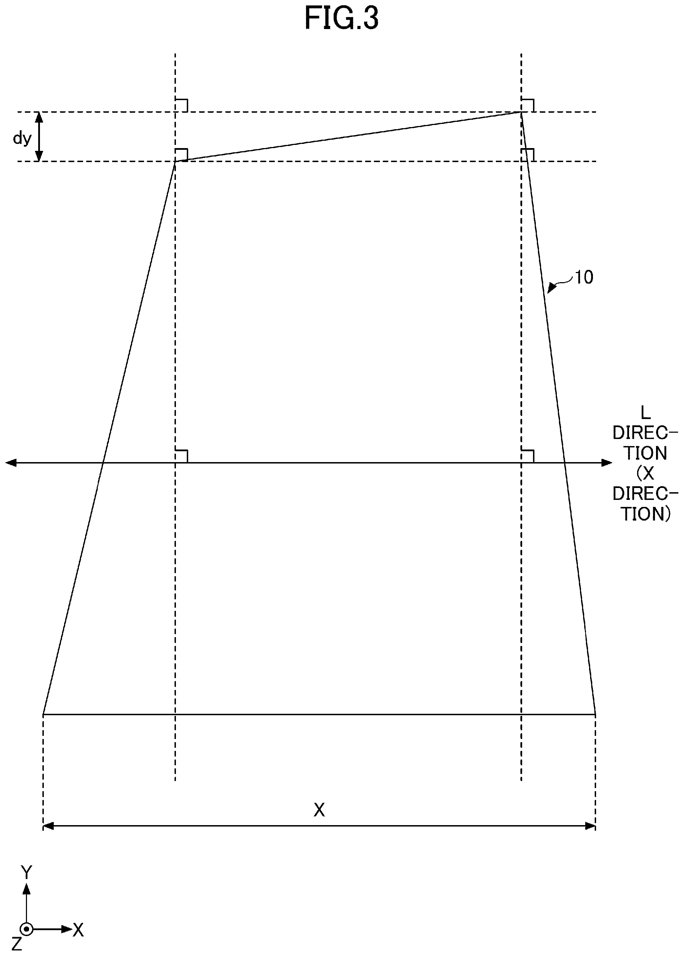

FIG. 3 is a diagram illustrating a preferable relationship between the size of the base material, the number of laminated portions, and the size of the gap, and FIG. 3 illustrates a single laminated portion 10. When the planar shape of the laminated portion 10 is a rectangular shape, the planar shape of the laminated portion 10 does not become a perfect rectangular shape due to manufacturing variation, etc., but becomes a shape as illustrated in FIG. 3, for example. In FIG. 3, the deviation of the laminated portion 10 from the rectangle is depicted in an emphasized manner.

In this case, L represents a length of a side in an X direction of the base material 20, and x represents a length of a longer side of two sides of the laminated portion 10 that are substantially parallel to the X direction. Further, dy represents a length in the Y direction between two points at which lines drawn perpendicular to the X direction meet a shorter side of the two sides of the laminated portion 10 that are substantially parallel to the X direction. dy corresponds to a gap in the Y direction.

Under the above conditions, when n representing the closest value that satisfies L ≤ n × x (n is an integer of 2 or more) is obtained, 50 um ≤ n × dy ≤ 500 um is preferably satisfied. In other words, when the number of the laminated portions 10 arranged in the X direction is n, it is preferable that 50 um ≤ n × dy ≤ 500 um be satisfied. In this case, the size of the multilayer structure, the number of laminated portions, and the size of the gap have the most preferable relationship, and the gap becomes less conspicuous.

As can be seen from the relationship of 50 µm ≤ n × dy ≤ 500 um, it is necessary to reduce the gap dy in the Y direction as the number n of the laminated portion 10 in the X direction increases. That is, as the number n of the laminated portions 10 arranged in the X direction is larger, the laminated portions need to be arranged densely so that the gap dy in the Y direction becomes smaller. Iif the laminated portions arranged in this manner, the gap becomes less conspicuous.

Since handling becomes difficult when the size of the laminated portion 10 is too large or too small, it is preferable that the laminated portion 10 be of an appropriate size that is easy to handle. As an example of the preferred size of the laminated portion 10, the lengths in the X direction and the Y direction are each approximately 10 cm.

As described above, the multilayer structure 1 includes a plurality of laminated portions 10 arranged on the base material 20. The laminated portion 10 has the resin layer 11 and the glass layer 14 laminated over the resin layer 11 through the adhesive layer 12, and the metal layer 13 is formed on the surface of the glass layer 14 that is oriented toward the adhesive layer 12. The thickness of the glass layer 14 is 10 um or more and 300 µm. or less.

In other words, the thickness of the glass layer 14 is small in each laminated portion 10 of the multilayer structure 1, and the distance between the surface of the glass layer 14 and the metal layer 13 is very close. Therefore, in the multilayer structure 1, it is possible to project a clear image by solving the problem of a conventional sheet glass in which an image is doubly reflected. The thinner the glass layer 14 is, the more difficult it is to visually identify the joints of the adjacent laminated portions 10.

In addition, by the structure in which the plurality of laminated portions 10 are fixed to the base material 20, it is possible to provide a large area multilayer structure, which can project a clear image and can be used as a thin glass mirror.

Here, materials and the like of each part of the multilayer structure 1 will be described.

### [Resin Layer]

The resin layer 11 is a base material on which the glass layer 14 and the like are laminated, and the resin layer 11 has flexibility. The resin layer 11 includes one or a plurality of layers.

Examples of the material of the resin layer 11 include polyester resins such as polyethylene terephthalate resins and polyethylene naphthalate resins, cycloolefin resins such as norbornene resins, polyether sulfone resins, polycarbonate resins, acrylic resins, polyolefin resins, polyimide resins, polyamide resins, polyimide amide resins, polyarylate resins, polysulfone resins, polyether imide resins, cellulose resins, and the like. Among these, polyethylene terephthalate, triacetyl cellulose and acrylic are preferably used because of the toughness of the resin. From the viewpoint of industrialization, it is particularly preferable to use a film-like polyethylene terephthalate.

The color of the resin layer 11 is not particularly specified, and may be transparent or opaque. The resin layer 11 may contain an additive such as inorganic particles. The thickness of the resin layer 11 (the total thickness when the resin layer 11 includes a plurality of layers) may be in the range of 10 um or more and 1000 µm or less, preferably 25 um or more and 500 µm or less, more preferably 25 um or more and 300 um or less, from the viewpoint of flexibility.

### [Glass Layer]

The glass layer 14 is not particularly specified, and an appropriate glass layer can be adopted depending on the purpose. The glass layer 14 may be, for example, soda lime glass, boric acid glass, aluminosilicate glass, quartz glass or the like according to the classification by composition. According to the classification by the alkali component, alkali-free glass and low alkali glass are given. The content of the alkali metal component (For example, Na₂O, K₂O, Li₂O) of the glass is preferably 15 wt% or less, more preferably 10 wt% or less.

The thickness of the glass layer 14 is preferably 10 µm or more in consideration of the surface hardness, airtightness, and corrosion resistance of the glass. The glass layer 14 is preferably flexible like a film and has a thickness of 300 µm or less to prevent double reflection of an image and to project a clear image. The thickness of the glass layer 14 is more preferably 30 µm or more and 200 µm or less, and particularly preferably 50 µm or more and 100 µm or less.

The light transmittance of the glass layer 14 at a wavelength of 550 nm is preferably 85% or more. The refractive index of the glass layer 14 at a wavelength of 550 nm is preferably 1.4 to 1.65. The density of the glass layer 14 is preferably 2.3 g/cm³ to 3.0 g/cm³, and more preferably 2.3 g/cm³ to 2.7 g/cm³.

The method of forming the glass layer 14 is not particularly specified, and an appropriate method can be adopted depending on the purpose. Typically, the glass layer 14 can be prepared by melting a mixture containing a main raw material such as silica or alumina, an antifoaming agent such as mirabilite and antimony oxide, and a reducing agent such as carbon at a temperature of approximately 1400°C to 1600°C, molding the mixture into a thin plate, and then cooling the thin plate. Examples of the method of forming the glass layer 14 include a slot-down draw method, a fusion method, and a float method. The glass layer formed in a plate-like shape by these methods may be chemically polished with a solvent such as hydrofluoric acid, as required, for thinning or enhancing smoothness.

### [Metal Layer]

The metal layer 13 is formed on the surface of the glass layer 14 that is oriented toward the adhesive layer 12. The metal layer 13 is a layer that reflects visible light incident through the glass layer 14. As the material of the metal layer 13, a material having a high visible light reflectance is preferable, for example, aluminum, silver, silver alloy, or the like. The thickness of the metal layer 13 is not particularly specified, but is, for example, approximately 10 nm to 500 nm. The metal layer 13 can be formed by, for example, a sputtering method, a vapor deposition method, a plating method, or the like. A functional layer such as an antifouling layer, an antireflection layer, and a conductive layer may be provided on a surface of the glass layer 14 (a surface of the glass layer 14 on which the metal layer 13 is not formed).

### [Adhesive Layer]

Any suitable adhesive may be used as the adhesive layers 12 and 15. From the viewpoint of appearance, the thickness of the adhesive layers 12 and 15 is preferably 0.5 µm or more and 25 um or less, more preferably 0.5 µm or more and 20 µm or less, and more preferably 0.5 um or more and 5 µm or less.

As the adhesive layers 12 and 15, for example, an acrylic pressure-sensitive adhesive, a silicone pressure-sensitive adhesive, a rubber pressure-sensitive adhesive, an ultraviolet curable acrylic adhesive, an ultraviolet curable epoxy adhesive, a thermosetting epoxy adhesive, a thermosetting melamine adhesive, a thermosetting phenolic adhesive, an ethylene vinyl acetate (EVA) interlayer, a polyvinyl butyral (PVB) interlayer, or the like can be used. Among these, an epoxy adhesive for cohesion and durability may be preferably used.

In the present specification, a pressure-sensitive adhesive refers to a layer that has adhesiveness at room temperature and adheres to the adherend under light pressure. Accordingly, even when the adherend adhered to the pressure-sensitive adhesive is peeled off, the pressure-sensitive adhesive retains a practical tack strength. An adhesive, on the other hand, refers to a layer that can bind a substance by intervening between the substances. Therefore, when the adherend adhered to the adhesive is peeled off, the adhesive does not have a practical adhesive strength.

### [Base Material]

The base material 20 is made of a material having higher rigidity than that of the laminated portion 10 in order to prevent the laminated portion 10 from bending. Examples of the material of the base material 20 include resin, glass, and metal. Among these, it is preferable to use glass because the dimensional change is small and the smoothness is excellent. Since the base material 20 is a lower layer of the metal layer 13 when viewed from the glass layer 14 side, the base material 20 does not have a function of a mirror.

When the base material 20 is thin, the entire multilayer structure 1 could become bent, and the image reflected on the multilayer structure 1, which is a mirror, is distorted. Therefore, when the area of the upper surface 20a of the base material 20 is S (m²) and the thickness of the base material 20 is T (mm), it is preferable to set the thickness T within a range satisfying 20S ≥ T ≥ S. Thus, the bending of the multilayer structure 1 can be prevented, and it is possible for the image reflected on the multilayer structure 1 to not be readily distorted.

### [Manufacturing Method]

The laminated portion 10 is obtained, for example, by laminating the glass layer 14, on which the metal layer 13 is formed by sputtering or the like, on the resin layer 11 via the adhesive layer 12, and dividing the glass layer into pieces in predetermined shapes by pressing or the like. Alternatively, the glass layer 14 on which the resin layer 11 and the metal layer 13 are formed may be continuously laminated by using a roll-to-roll process via the adhesive layer 12, and then divided into pieces in an any desired size by pressing or the like. The individually divided laminated portions 10 are arranged on the base material 20 through the adhesive layer 15 by a laminator or the like.

### [Application]

The multilayer structure 1 can be used as a thin glass mirror, and specifically used, for example, as a full-length mirror, a curved surface of a large security mirror, a mirror for solar thermal power generation, an optical camouflage mirror, a lighting mirror, etc. The same applies to the multilayer structures exemplified below.

### <Modifications of First Embodiment>

Modifications of the first embodiment illustrate examples of a multilayer structure having a structure different from that of the first embodiment. In the modifications of the first embodiment, description of the same components as those of the above-described embodiment may be omitted.

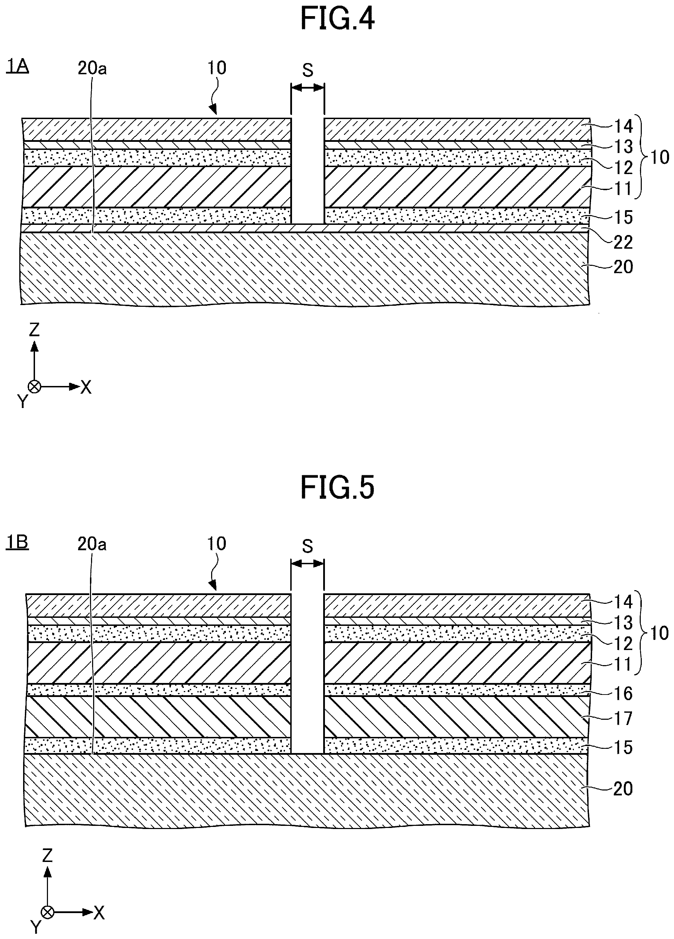

FIG. 4 is a cross-sectional view illustrating a multilayer structure according to a first modification of the first embodiment. Note that a plan view of the multilayer structure according to the first modification of the first embodiment is the same as that of FIG. 1, and is therefore not illustrated. As illustrated in FIG. 4, a multilayer structure 1A differs from the multilayer structure 1 (see FIG. 2, etc.) in that a light-scattering colored layer 22 is formed on the upper surface 20a of the base material 20.

The colored layer 22 is a layer that coats the upper surface of the base material 20 with an opaque colored material, and the thickness of the layer is approximately 1 um. The colored layer 22 may be a layer having a light scattering property with respect to light incident from the gap S, and may be, for example, a metallic silver or white layer. Here, the light scattering property is a property that generates light traveling in a random direction by scattering at least a part of the light incident from the gap S. The colored layer 22 can be formed by forming a coating liquid, in which metal particles such as silver nanoparticles are dispersed, on the upper surface 20a of the base material 20 by a spray coating method, a spin coating method, or the like. Since the metal particles are dispersed in the colored layer 22, the light scattering property can be enhanced.

Since the light-scattering colored layer 22 is formed on the upper surface 20a of the base material 20 in this manner, light incident from the gap S is scattered. Therefore, the joints can be made more difficult to be visually identified as compared with the case where the size of the gap S formed at the joints of the adjacent laminated portions 10 is the same, and the colored layer 22 is not formed. Needless to say, it is more preferable to use a colored layer in combination with measures for reducing the gap S.

FIG. 5 is a sectional view illustrating a multilayer structure according to a second modification of the first embodiment. Note that a plan view of the multilayer structure according to the second modification of the first embodiment is the same as that of FIG. 1, and is therefore not illustrated. As illustrated in FIG. 5, a multilayer structure 1B differs from the multilayer structure 1 (see FIG. 2) in that a buffer layer 17 is laminated via the adhesive layer 16 on a side of the resin layer 11 opposite to the side of the resin layer 11 over which the glass layer 14 is laminated via the adhesive layer 12.

The buffer layer 17 is a cushioning layer located between the base material 20 and the resin layer 11. The thickness of the buffer layer 17 is preferably 100 um or more and 2000 µm or less from the viewpoint of developing a good cushioning property. Examples of the material of the buffer layer 17 include a urethane resin and various foaming materials. Examples of the various foaming materials include a polyolefin resin, a polypropylene resin, a polystyrene resin, a polyethylene resin, and the like. A commercially available foamed sheet may be used as the buffer layer 17. Examples of commercially available foamed sheets include SCF (registered trademark) manufactured by Nitto Denko Corporation. The adhesive layer 16 can be any adhesive or pressure-sensitive adhesive exemplified as the adhesive layers 12 and 15.

Thus, by providing the buffer layer 17 as a lower layer of the resin layer 11, the cushioning property of the multilayer structure 1B can be enhanced, and the impact applied to the multilayer structure 1B from the outside can be softened. Instead of the buffer layer 17 or in addition to the buffer layer 17, a layer having another function such as a heat insulating layer may be laminated.

In the multilayer structure 1A illustrated in FIG. 4, the adhesive layer 16 and the buffer layer 17 illustrated in FIG. 5 may also be laminated between the resin layer 11 and the adhesive layer 15.

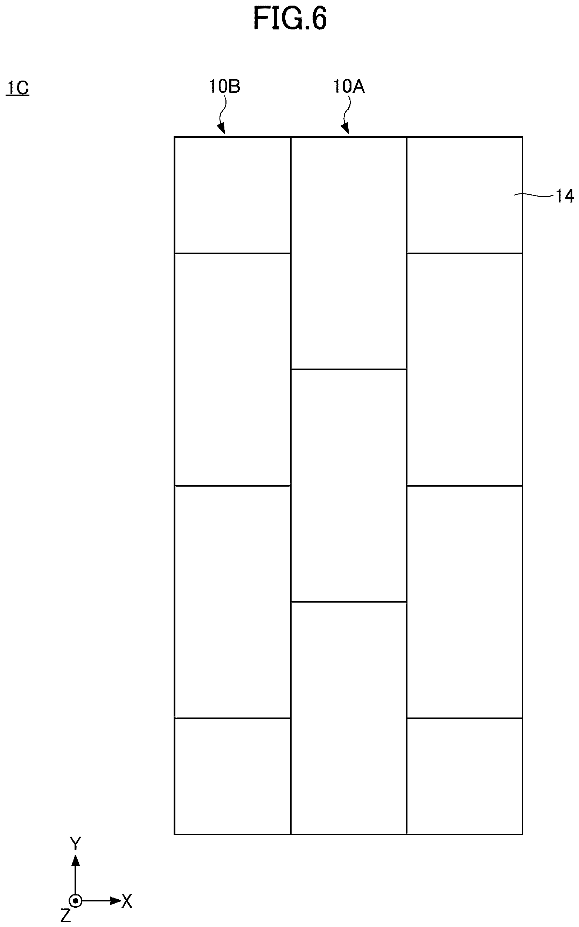

FIG. 6 is a plan view illustrating a multilayer structure according to a third modification of the first embodiment. A cross-sectional structure of the multilayer structure according to the third modification of the first embodiment may be, for example, the same as any one of those of FIGS. 2, 4, and 5.

As illustrated in FIG. 6, in a multilayer structure 1C, two types of laminated portions 10A and 10B are mixed and arranged in a rectangular shape as a whole. In the example of FIG. 6, the laminated portion 10B has the same length in the X-direction as the laminated portion 10A, but the laminated portion 10B has a length in the Y-direction that is half the length of the laminated portion 10A.

As described above, it is not necessary to have one type of laminated portion constituting the multilayer structure, and two types of laminated portions may be used. Alternatively, the multilayer structure may have three or more types of laminated portions.

The planar shape of the laminated portions are not limited to a rectangular shape, but may be a triangular shape, a hexagonal shape, or the like, or may be a mixture of these shapes. The shape of the multilayer structure as a whole does not have to be rectangular, and laminated portions having different planar shapes can be mixed together to form any desired shape, for example.

The multilayer structure need not be in a planar shape parallel to the XY plane, but may be curved, for example, in a semicylindrical shape or a dome-like shape. Here, the dome-like shape means a shape in which the position of the surface of the multilayer structure (the surface of the glass layer) in the Z direction gradually increases from the periphery toward the center.

In the case of FIG. 1 of the first embodiment, there are two places where three joints of the laminated portions adjacent to each other in the Y direction are linearly aligned in the X direction. By contrast, in the case of FIG. 6, there is no place where two or more joints of laminated portions adjacent to each other in the Y direction are aligned in the X direction. In other words, in the case of FIG. 6, the joints of the laminated portions adjacent to each other in the Y direction are arranged in a staggered manner, the joints are not aligned with each other, and the joints are discontinuous with each other.

As described above, since there are places where the joints of the adjacent laminated portions are discontinuous with each other, it is possible to make the joints more difficult to visually identify even when the sizes of the gaps S are the same. Although FIG. 6 illustrates an example in which the joints of the laminate portions adjacent to each other in the Y direction are discontinuous, the same advantageous effect is achieved when the joints of the laminate portions adjacent to each other in the X direction are discontinuous. That is, it is preferable that the joints are discontinuous with each other in at least one of the X direction or the Y direction.

Although the preferred embodiments and the like have been described in detail above, various modifications and substitutions can be made to the embodiments and the like without departing from the scope of the claims.

This international application claims priority under Japanese Patent Application No. 2020-059418, filed with the Japanese Patent Office on March 30, 2020, and the entire contents of Japanese Patent Application No. 2020-059418 are incorporated herein by reference.

### [Description of Reference Codes]

- 1, 1A, 1B, 1C: multilayer structure
- 10, 10A, 10B: laminated portion
- 11: resin layer
- 12, 15, 16: adhesive layer
- 13: metal layer
- 14: glass layer
- 17: buffer layer
- 20: base material
- 20a: upper surface
- 22: colored layer

## Claims

1. A multilayered structure comprising:
a plurality of laminated portions arranged on a base material, wherein the laminated portions each include
a resin layer,
a glass layer laminated over the resin layer via an adhesive layer, and
a metal layer formed on a surface of the glass layer, the surface being oriented toward the adhesive layer, wherein a thickness of the glass layer is 10 µm or more and 300 µm or less, and a thickness of the resin layer is 10 µm or more and 1000 µm or less.

2. The multilayer structure according to claim 1, wherein a gap between adjacent laminated portions is 10 µm or more and 500 µm or less.

3. The multilayer structure according to claim 2, wherein the gap between adjacent laminated portions is 10 µm or more and 50 µm or less.

4. The multilayer structure according to any one of claims 1 to 3,
wherein L represents a length of a side of the base material in a first direction, x represents a length of a longer side of two sides of the laminated portion, the two sides being substantially parallel to the first direction, and
dy represents a length in a second direction perpendicular to the first direction between two points at which lines drawn perpendicular to the first direction meet a shorter side of the two sides of the laminated portion, the two sides being substantially parallel to the first direction, and
wherein when n (n is an integer of 2 or more) representing a closest value that satisfies L ≤ n × x is obtained, 50 µm ≤ n × dy ≤ 500 -pm is satisfied.

5. The multilayer structure according to any one of claims 1 to 4, comprising:
a light-scattering colored layer that is formed on a surface of the base material on which the laminated portions are to be arranged.

6. The multilayer structure according to claim 5, wherein the colored layer includes metal particles dispersed therein.

7. The multilayer structure according to any one of claims 1 to 6, wherein joints of the adjacent laminated portions are discontinuous with each other.

8. The multilayer structure according to any one of claims 1 to 7, wherein when S represents an area of the surface of the base material on which the laminated portions are arranged, and T represents a thickness of the base material, 20S ≥ T ≥ S is satisfied.

9. The multilayer structure according to any one of claims 1 to 8, wherein the base material is glass.

10. The multilayer structure according to any one of claims 1 to 9, comprising:
a buffer layer provided between the base material and the resin layer.
